# EUROPÄISCHE PATENTANMELDUNG

(11) **EP 0 920 978 A2**
(43) Veröffentlichungstag der Anmeldung: **09.06.1999**
(21) Anmeldenummer: 98122272.2
(22) Anmeldetag: 24.11.1998
(51) Int. Cl.: B29C 65/20

(54) **Schweissverfahren**

(30) Priorität: 25.11.1997 GB 9724909
(71) Anmelder: REHAU AG + Co, 95111 Rehau (DE)
(72) Erfinder: Smith, Gary Andrew, Ross on Wye Herefordshire HR9 5QN (GB)

(57) **Zusammenfassung**

Die Erfindung betrifft ein Verfahren zum Schweißen von Kunststoffbauteilen, z. B. für die Anwendung in der Bauindustrie und bei der Wohnungsausstattung. Eine spezielle Anwendung der vorliegenden Erfindung ist das Verbinden von Profilen, welche zur Herstellung von Tür- und Fensterrahmen aus Kunststoff verwendet werden.

Die Erfindung hat sich die Aufgabe gestellt, ein Verfahren zur Herstellung solcher Tür- und Fensterrahmen anzugeben, welches die Festigkeit der Schweißverbindung zusammen mit dem guten Erscheinungsbild der Verbindung mit innerer mechanischer Befestigung gewährleistet.

Dies wird dadurch erreicht, daß wenigstens eine der zu verbindenden Flächen so zugeschnitten wird, daß ein Abschnitt der Fläche gegenüber dem restlichen Teil der Fläche vorsteht, und daß nur der besagte Abschnitt der Fläche geschmolzen wird.

## Beschreibung

Die vorliegende Erfindung betrifft ein Verfahren zum Schweißen von Kunststoffbauteilen, zum Beispiel für die Anwendung in der Bauindustrie und bei der Wohnungsausstattung. Eine spezielle Anwendung der vorliegenden Erfindung ist das Verbinden von Profilen, welche zur Herstellung von Tür- und Fensterrahmen aus Kunststoff verwendet werden.

Gegenwärtig werden verschiedene unterschiedliche Verfahren angewandt, um Profile miteinander zu verbinden. Ein bekanntes Verfahren besteht in der Verwendung außen angebrachter Formteile, die mit Hilfe von Klebstoff oder von mit einem Gewinde versehenen Befestigungselementen befestigt werden. Dieses Verfahren ist kostenaufwendig, weist eine geringe Festigkeit auf und hat ein schlechtes Aussehen zur Folge; die Montage ist jedoch relativ einfach. Bei einem ähnlichen Verfahren werden innen angebrachte, mit Klebstoff oder durch mit einem Gewinde versehene Befestigungselemente befestigte Formteile verwendet, die ähnliche Vor- und Nachteile aufweisen wie bei den Verfahren mit außen angebrachten Formteilen, außer daß die äußere Erscheinung im allgemeinen gut ist. Die innen angebrachten Formteile können durch Stahlplatten ersetzt werden, die in ihrer Position festgeschraubt werden; sie bieten ähnliche Vor- und Nachteile. Ein weiteres Verfahren umfaßt das Schweißen, zum Beispiel Stumpfschweißen, von Profilen. Dies ist ein relativ billiges Verfahren, mit dem Verbindungen von hoher Festigkeit hergestellt werden; die Montage erfordert jedoch einen zweiten Arbeitsgang, um den Grat zu beseitigen, und das Aussehen ist im allgemeinen schlechter als bei Verbindungen, die eine innere Befestigung aufweisen.

Die vorliegende Erfindung hat das Ziel, ein Verfahren zur Herstellung solcher Verbindungen bereitzustellen, welches die Festigkeit der Schweißverbindung zusammen mit dem guten Erscheinungsbild der Verbindung mit innerer mechanischer Befestigung gewährleistet

Gemäß der vorliegenden Verbindung werden die zu verbindenden Profile zunächst zugeschnitten, um die zu verbindenden Endflächen herzustellen, und anschließend wird ein Teil der sichtbaren Oberfläche oder die gesamte sichtbare Oberfläche an wenigstens einem der Profile tiefer abgeschnitten, unter der Höhe der Endfläche des betreffenden Profils, bevor die Profile durch Erwärmen der Enden und Zusammenpressen der Profile verschweißt werden.

Somit wird deutlich, daß ein wesentlicher Teil des Verfahrens darin besteht, einen Abschnitt des Profils, der eine ausgewählte Außenfläche definiert, tiefer abzuschneiden, unterhalb der allgemeinen Höhe des abgeschnittenen Endes. Folglich wird das abgeschnittene Ende gedanklich in zwei Abschnitte unterteilt: einen ersten Abschnitt auf der ursprünglichen Höhe der Endfläche und einen zweiten Abschnitt, welcher die ausgewählte Außenfläche enthält, auf einer niedrigeren Höhe. Der Wert, um den der zweite Abschnitt tiefer liegt, hängt von den Umständen ab, liegt jedoch typischerweise im Bereich von 1 bis 5 mm und beträgt vorzugsweise 2 bis 3 mm.

Während des Schweißprozesses wird vorzugsweise nur der erste Abschnitt geschmolzen, so daß der zweite Abschnitt unverformt bleibt. Nachdem die abgeschnittenen Enden auf diese Weise geschmolzen wurden, werden die zwei Profile aneinandergepreßt, bis der geschmolzene erste Abschnitt in tatsächlich verschwunden ist. In diesem Moment, und unter der Voraussetzung, daß beide zu verbindenden Profile auf ähnliche Weise behandelt wurden (die bevorzugte Situation), stoßen die beiden nicht geschmolzenen zweiten Abschnitte des Profils stumpf aneinander.

Somit hat die Verbindungsstelle, zumindest bei Betrachtung in Richtung der ausgewählten Oberfläche, das Aussehen eines mechanisch zusammengefügten Stumpfstoßes, ist jedoch in Wirklichkeit durch Schweißen verbunden. Falls gewünscht, kann der Arbeitsgang durch Beseitigen des Grates vervollständigt werden, der durch überschüssiges Material von denjenigen äußeren Öffnungen der Profile, welche nicht tiefer abgeschnitten wurden, gebildet wird. Dies kann mit einem Messer erfolgen, oder durch Herstellung einer Nut entlang der Schweißnaht, oder durch irgendein anderes geeignetes Verfahren.

Wenn zwei Profile miteinander zu verbinden sind, ist es vorzuziehen, daß der zusätzliche Arbeitsgang des tieferen Abschneidens an den Flächen der abgeschnittenen Enden beider Profile ausgeführt wird; weiterhin, daß diejenigen Teile des Profils, die tiefer abgeschnitten werden, bei den beiden Profilen einander entsprechen, so daß die geschmolzenen Abschnitte, wenn sie stumpf zusammengefügt werden, miteinander verschmelzen und die nicht geschmolzenen Abschnitte einander berühren, wobei die letzteren natürlich nur stumpf aneinanderstoßen und nicht verschmelzen, zumindest nicht in nennenswertem Umfang. Bei einer alternativen Variante werden die zwei Abschnitte der abgeschnittenen Enden der Profile in unterschiedlichem Grade verschmolzen, wobei die ersten Abschnitte in höherem Grade verschmolzen werden als die zweiten Abschnitte. Dies kann, wenn es sorgfältig gesteuert wird, zu einer begrenzten Verschmelzung der zweiten Abschnitte führen, die nicht ausreicht, um eine nennenswerte Verformung oder Gratbildung hervorzurufen.

Das erfindungsgemäße Verfahren kann angewandt werden, um Eckverbindungen mit beliebigem Winkel oder gerade Verbindungen herzustellen.

Allgemein gesagt, ist die ausgewählte Außenfläche eine Fläche, welche bei der Verwendung des Profils die vom ästhetischen Standpunkt aus kritischste Fläche ist. In einem Tür- oder Fensterrahmen zum Beispiel könnte es die deutlich sichtbare Außenfläche der 45°-Verbindung an der Ecke des Rahmens sein - die meisten, wenn nicht alle übrigen Teile der Verbindung sind beim Gebrauch unsichtbar, so daß der Grat nicht sichtbar ist. Die Erfindung ist jedoch nicht darauf beschränkt, nur eine ausgewählte Außenfläche des Profils auf diese Weise zu behandeln; falls es aus ästhetischen oder sonstigen Gründen erforderlich ist, die Verbindung zwischen mehreren Außenflächen als einfachen Stumpfstoß auszuführen, können mehrere Flächen tiefer abgeschnitten werden. Es ist jedoch klar, daß die Verbindung um so schwächer wird, je größer der tiefer abgeschnittene Teil des abgeschnittenen Endes des Profils ist, es sei denn, daß Maßnahmen ergriffen werden, um zusätzliche Innenwände und/oder eine Verrippung innerhalb des Profils vorzusehen und dadurch einen Ausgleich zu schaffen.

Bei einer bevorzugten Ausführungsform der Erfindung ist das Profil so beschaffen, daß eine Innenwand in der Nähe der ausgewählten Außenfläche definiert wird, wobei diese Wand nicht tiefer abgeschnitten wird und folglich an der Stumpfschweißung beteiligt ist. Dadurch wird sichergestellt, daß kein Verlust an Festigkeit dadurch eintritt, daß bestimmte Abschnitte des Profils nicht oder nur in geringem Maße verschweißt werden.

Damit die Erfindung besser verständlich wird, wird nun eine lediglich als Beispiel dienende Ausführungsform derselben unter Bezugnahme auf die beigefügten Zeichnungen beschrieben, wobei:
die Abbildungen 1, 2 bzw. 3 eine Stirnseiten-, Seiten- bzw. Perspektivansicht eines Profils darstellen, das für die Verwendung bei dem erfindungsgemäßen Verfahren geeignet ist, und
die Abbildung 4 eine vergrößerte Stirnseitenansicht des Profils ist, die ähnlich zu Abbildung 1 ist, jedoch den tiefer abgeschnittenen Abschnitt des Profils zeigt.

Das abgebildete spezielle Profil ist ein Türprofil für Haushaltgeräte; das erfindungsgemäße Verfahren kann jedoch bei einer beliebigen Verbindung für einen beliebigen Zweck angewandt werden, insbesondere dann, wenn eine attraktive Oberfläche für zumindest einen Teil der Außenfläche der Verbindung gewünscht wird.

Es ist klar, daß zwei Profilteile erforderlich sind, um eine Verbindung herzustellen; es ist nur eines dargestellt, wobei das andere jedoch vorzugsweise auf ähnliche Weise wie nachfolgend beschrieben bearbeitet wird.

Das Profil wird allgemein mit der Bezugszahl 1 bezeichnet und wird durch Extrusion aus Kunststoff, wie etwa PVC oder ABS, geformt. Um eine Eckverbindung herzustellen, werden die zu verbindenden Profile zunächst unter einem Winkel von 45° abgeschnitten. Bei dem bekannten Verfahren würden die so zugeschnittenen Enden anschließend durch Kontakt mit der Heizplatte einer Schweißmaschine bis zum Schmelzpunkt erwärmt, und die zwei schräg abgeschnittenen Enden würden aneinandergepreßt, um eine zuverlässige Verbindung herzustellen.

Bei dem vorliegenden Verfahren geht dem Schritt des Schweißens ein tieferes Abschneiden eines ausgewählten Teils der Oberfläche des abgeschnittenen Endes des Profils 1 voraus. Bei dem abgebildeten Profil soll die Fläche 2 in dem zusammengebauten und eingepaßten Rahmen sichtbar sein, und es wird daher gewünscht, die Verbindungsstellen, zumindest soweit sie zwischen den Flächen 2 erscheinen, so attraktiv wie möglich zu gestalten.

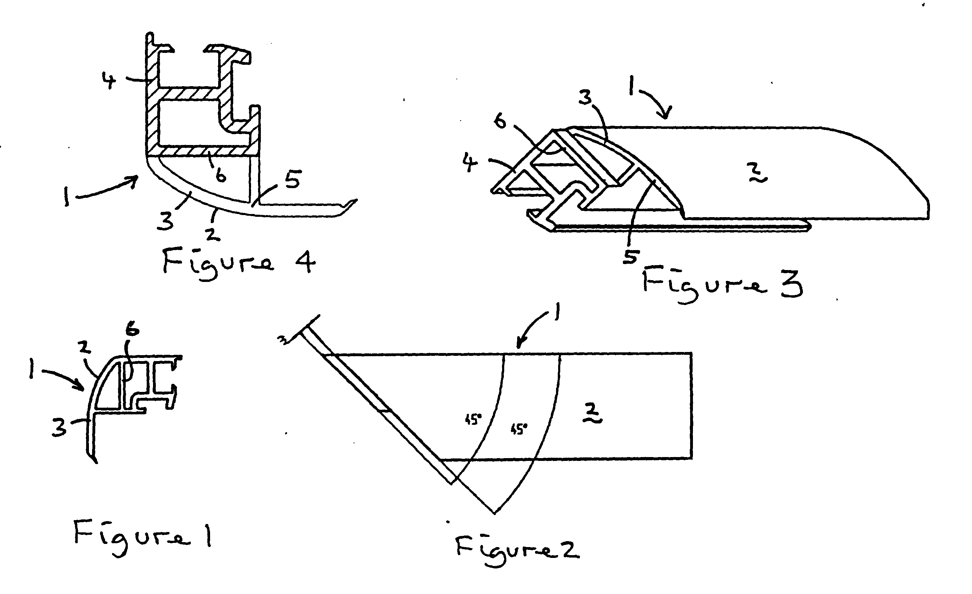

Zu diesem Zweck wird diejenige Wand 3 des Profils, welche die Oberfläche 2 bildet, um 3 mm tiefer abgeschnitten als der restliche Teil des abgeschnittenen Endes. Dies ist in Abbildung 4 deutlich gezeigt, wo der schraffierte Abschnitt 4 denjenigen Teil des Profils darstellt, der nicht tiefer abgeschnitten wurde, während der nicht schraffierte Abschnitt 5 wie beschrieben tiefer abgeschnitten wurde. Man erkennt, daß der tiefer abgeschnittene Abschnitt die Wand 3 umfaßt.

Der Arbeitsgang des tieferen Abschneidens kann auf eine beliebige geeignete Weise ausgeführt werden, wie etwa durch Sägen oder spanende Formgebung.

Nachdem der Arbeitsgang des tieferen Abschneidens ausgeführt wurde, wird die Schweißung wie üblich durchgeführt, mit dem Unterschied, daß nur der Abschnitt 4 jedes Profils bis zum Schmelzpunkt erwärmt wird; der Abschnitt 5 bleibt ungeschmolzen. Danach werden die zwei Profile zusammengepreßt, bis die zwei nicht geschmolzenen Abschnitte 5 stumpf aneinanderstoßen.

Somit scheinen die Profile, wenn sie in der Richtung der Fläche 2 betrachtet werden, durch einen mechanischen Stumpfstoß zusammengefügt zu sein, während die Verbindung in Wirklichkeit geschweißt ist.

Falls erforderlich, kann etwaiges überschüssiges Material von den verbleibenden äußeren Teilen der Schweißnaht auf herkömmliche Weise entfernt werden.

Bei Anwendung des oben beschriebenen Verfahrens muß der fertigen Verbindungsstelle Aufmerksamkeit gewidmet werden, besonders im Bereich von Abschnitt 5, wo nur ein stumpfes Aneinanderstoßen von Flächen vorliegt und keine Befestigung. Wenn dies ein Problem ist, würde eine Lösung darin bestehen, die Abschnitte 5 nur leicht durch Wärme zu verschweißen oder sogar ein völlig anderes Befestigungsverfahren zu verwenden, zum Beispiel Klebstoff. Dies hat den Vorteil einer Abdichtung der stumpf aneinanderstoßenden Flächen gegen das Eindringen von Feuchtigkeit. Eine andere Lösung, die in den beigefügten Zeichnungen dargestellt ist, besteht darin, das Profil mit einer Wand auszustatten, wahrscheinlich einer inneren Wand, welche einen Teil von Abschnitt 4 bildet (und daher geschweißt wird) und welche sich ziemlich nahe bei dem nicht geschweißten Abschnitt befindet, so daß sie einen möglichen Mangel an Festigkeit in diesem Bereich kompensiert. Eine solche Wand könnte sich zum Beispiel entlang der Trennlinie zwischen den Abschnitten 4 und 5 erstrecken (jedoch im Abschnitt 4). Eine solche Wand ist in den Zeichnungen dargestellt und mit der Bezugszahl 6 versehen.

Der Schnittwinkel muß nicht 45° betragen. Ein Winkel von 45° wird verwendet, um gleiche Profile unter einem Winkel von 90° zu verbinden. Andere Winkel können verwendet werden, um andere Typen von Eckverbindungen zu bilden - zum Beispiel mit anderen Winkeln, oder zwischen unterschiedlichen (jedoch zusammenpassend geformten) Profilen. Gerade Verbindungen können ebenfalls mit diesem Verfahren hergestellt werden, unter Verwendung von schräg oder unter einem Winkel von 90° quer ausgeführten Schnitten. Ferner müssen der geschweißte und der nicht geschweißte Abschnitt nicht notwendigerweise unter demselben Winkel abgeschnitten werden; es kann bei bestimmten Profilformen Umstände geben, unter denen ein leicht unterschiedlicher Winkel verwendet wird, jedoch nach wie vor mit dem letztendlichen Ziel, die nicht geschmolzenen Abschnitte zu einem tadellosen Stumpfstoß zusammenzubringen.

## Patentansprüche

1. Verfahren zum Verbinden von Kunststoffbauteilen durch Schweißen, wobei das besagte Verfahren aus den Schritten des Zuschneidens der zu verbindenden Flächen und des darauffolgenden Schmelzens wenigstens einer der Flächen und Zusammenpressens der Flächen, so daß eine Verbindung zwischen den Bauteilen hergestellt wird, besteht, wobei das besagte Verfahren dadurch gekennzeichnet ist, daß wenigstens eine der zu verbindenden Flächen so zugeschnitten wird, daß ein Abschnitt der Fläche gegenüber dem restlichen Teil der Fläche vorsteht, und dadurch, daß nur der besagte Abschnitt der Fläche geschmolzen wird.

2. Verfahren nach Anspruch 1, bei dem nach dem Schmelzen die Flächen derart zusammengepreßt werden, daß der besagte restliche Teil der Fläche stumpf an einen entsprechenden Teil der anderen Fläche stößt.

3. Verfahren nach einem der Ansprüche 1 oder 2, bei dem der besagte Abschnitt der Fläche derart geschmolzen wird, daß bei Zusammenpressen der Flächen die Verbindung gänzlich oder hauptsächlich durch den besagten Abschnitt der Fläche hergestellt wird, während der restliche Teil der Fläche im wesentlichen unverformt ist.

4. Verfahren nach Anspruch 3, bei dem nur der besagte Abschnitt der Fläche geschmolzen wird, so daß bei Zusammenpressen der Flächen der besagte restliche Teil der Fläche einen Stumpfstoß mit einem entsprechenden Abschnitt der anderen Fläche bildet.

5. Verfahren nach Anspruch 3, bei dem sowohl der Abschnitt der Fläche, welcher vorsteht, als auch der restliche Teil geschmolzen werden, jedoch in unterschiedlichem Grade, so daß der besagte Abschnitt der Fläche stärker geschmolzen wird als der restliche Teil.

6. Verfahren nach einem der vorhergehenden Ansprüche, bei dem beide zu verbindenden Flächen auf die oben angegebene Weise zugeschnitten werden, wobei sich der vorstehende Abschnitt in jedem Falle in einer entsprechenden Position in bezug auf den entsprechenden Abschnitt der anderen Fläche befindet.

7. Verfahren nach einem der vorhergehenden Ansprüche, bei dem beide besagten Abschnitte der Fläche und der restliche Teil der Fläche in im wesentlichen parallelen Ebenen liegen und durch eine Stufe getrennt sind.

8. Verfahren nach Anspruch 7, bei dem die Stufe in einer Ebene verläuft, die im wesentlichen rechtwinklig zu den besagten parallelen Ebenen des besagten Abschnittes ist.

9. Verfahren nach Anspruch 7, bei dem die Stufe eine Schräge zwischen dem besagten Abschnitt der Fläche und dem restlichen Teil bildet.

10. Verfahren nach einem der Ansprüche 7 bis 9, bei dem die Höhe der Stufe im Bereich von 1 bis 5 mm liegt.

11. Verfahren nach Anspruch 7, bei dem die Höhe der Stufe im Bereich von 2 bis 3 mm liegt.

12. Verfahren nach einem der Ansprüche 1 bis 6, bei dem die Fläche mit einer kontinuierlichen flachen Neigung zugeschnitten wird, so daß der besagte Abschnitt der Fläche aus einem Teil der geneigten Fläche besteht, der weiter vorn als der restliche Teil liegt.

13. Verfahren nach Anspruch 12, bei dem die Fläche eine Neigung mit einem Winkel im Bereich 10° bis 15° aufweist.

14. Verfahren nach einem der vorhergehenden Ansprüche, bei dem die zu verbindenden Bauteile die Form von Hohlprofilen aufweisen.

15. Verfahren nach Anspruch 14, bei dem in dem Bereich des restlichen Teils der Fläche zusätzliche Innenwand-Mittel vorgesehen sind, um einen Mangel an Festigkeit in diesem Bereich der Verbindung auszugleichen.

16. Verfahren nach einem der vorhergehenden Ansprüche, bei dem sich der restliche Teil der Fläche bis zu einem Rand der zu verbindenden Fläche erstreckt, wobei der besagte Rand ein Rand ist, von dem in der fertiggestellten Verbindung gefordert wird, daß er das Aussehen einer Stoßverbindung hat, mit wenig oder keiner Verschmelzung zwischen den Bauteilen im Bereich des Randes.
